# EUROPÄISCHE PATENTANMELDUNG

(11) **EP 1 229 445 A1**
(43) Veröffentlichungstag der Anmeldung: **07.08.2002**
(21) Anmeldenummer: 01102428.8
(22) Anmeldetag: 02.02.2001
(51) Int. Cl.: G06F 9/50

(54) **Verfahren zum Betreiben eines Rechnersystems und Vorrichtung**

(71) Anmelder: Cluster Labs GmbH, 14055 Berlin (DE)
(72) Erfinder: Feige, Lothar, 12159 Berlin (DE); Riedel, Stephan, 14199 Berlin (DE); Roos, Norbert, 10439 Berlin (DE); Kaschubek, Tilo, 12437 Berlin (DE)
(74) Vertreter: Liesegang, Eva

(57) **Zusammenfassung**

Die Erfindung betrifft ein Verfahren zum Betreiben eines Rechnersystems sowie ein Rechnersystem, in welchem eine Zentraleinheit (1) mit mindestens zwei digitalen Signalprozessoren (3.1-3.n) so verbunden ist, daß zwischen der Zentraleinheit (1) und den mindestens zwei digitalen Signalprozessoren (3.1-3.n) jeweils elektronische Daten ausgetauscht werden können, wobei die mindestens zwei digitalen Signalprozessoren (3.1-3.n) auf Anforderung in dem Rechnersystem anfallende, digitale Rechenaufgaben automatisch ausführen. Bei dem Verfahren Informationen über eine Auslastung der mindestens zwei digitalen Signalprozessoren (3.1-3.n) mit Hilfe von Erfassungsmitteln automatisch erfaßt; und anschließend digitale Rechenaufgaben auf die mindestens zwei digitalen Signalprozessoren (3.1-3.n) in Abhängigkeit von der erfaßten Auslastung der mindestens zwei digitalen Signalprozessoren (3.1-3.n) mit Hilfe von Verteilermitteln verteilt.

## Beschreibung

Die Erfindung liegt auf dem Gebiet von Rechnersystemen, insbesondere Rechnersystemen mit einer Zentraleinheit und mindestens zwei mit der Zentraleinheit verbundenen, digitalen Signalprozessoren und/oder mindestens zwei mit der Zentraleinheit verbundenen, programmierbaren Logikbausteinen sowie von Netzwerken, die ein oder mehrere solcher Rechnersysteme umfassen.

In derartigen Rechnersystemen benutzt die Zentraleinheit digitale Signalprozessoren und/oder programmierbare Logikbausteine zum Verarbeiten großer elektronischer Datenmengen, beispielsweise in Verbindung mit einer Komprimierung, einer Filterung oder einer Verschlüsselung von elektronischen Daten. Solche Rechenoperationen verursachen für die Zentraleinheit eine sehr hohe Arbeitslast, die von der Zentraleinheit nur relativ langsam abgearbeitet werden, da der technische Aufbau der Zentraleinheit in der Regel für solche Operationen nicht optimiert ist. Die Verarbeitung der Daten im Rahmen dieser Operationen kann deshalb zu Verzögerungen der Datenmengenverarbeitung führen. Um dieses zu vermeiden, lagert die Zentraleinheit solche Operationen auf die programmierbaren Logikbausteine und/oder digitalen Signalprozessoren aus.

Ein digitaler Signalprozessor ist ein Prozessor, der mehrere interne Rechenwerken umfaßt und deshalb in der Lage ist, verschiedene Multiplikationen und Additionen gleichzeitig auszuführen. In vielen Anwendungsfällen können die digitalen Signalprozessoren parallel zu derartigen Berechnungen elektronische Daten bewegen. In der Regel zeichnen sich digitale Signalprozessoren durch eine konsequente Trennung von Programm- und Datenspeichern aus. Dieses wird auch als Harvard-Architektur bezeichnet. Ein programmierbarer Logikbaustein ist eine Anordnung auf der Basis von programmierbaren, elementaren bool'schen Verknüpfungen und verschiedenen Flipflops.

Die Auslagerung bestimmter Operationen von der Zentraleinheit auf die digitalen Signalprozessoren und/oder die programmierbaren Logikbausteine führt zu einem erhöhten Datenaustausch zwischen den Ressourcen des Rechnersystems. Dieses kann wiederum zur Verzögerung bei der Verarbeitung von Daten in dem Rechnersystem führen.

Aufgabe der Erfindung ist es, ein Verfahren zum Betreiben von Rechnersystemen der eingangs genannten Art sowie ein Rechnersystem zum Ausführen des Verfahrens zu schaffen, bei dem die Leistungsfähigkeit des Rechnersystems beim Abarbeiten von Operationen verbessert wird, insbesondere mittels einer optimierten Nutzung der vorhandenen elektronischen Ressourcen.

Diese Aufgabe wird erfindungsgemäß durch ein Verfahren nach Anspruch 1 sowie eine Datenverarbeitungseinrichtung nach Anspruch 11 gelöst.

Der wesentliche Vorteil, welcher mit der Erfindung gegenüber dem Stand der Technik erreicht ist, besteht darin, daß die in dem Rechnersystem anfallenden Rechenoperationen und/oder Datenbewegungen in Abhängigkeit von einer Auslastung der mit der Zentraleinheit verbundenen digitalen Signalprozessoren und/oder der mit der Zentraleinheit verbundenen programmierbaren Logikbausteine ausgeführt wird. Hierdurch kann vermieden werden, daß einzelne digitale Signalprozessoren/programmierbare Logikbausteine überlastet werden, während andere digitale Signalprozessoren/programmierbare Logikbausteine freie Rechen- bzw. Lastkapazität aulweisen. Die Leistungsfähigkeit des Rechnersystems wird so mittels einer optimierten Nutzung der vorhandenen Ressourcen verbessert.

Mit Hilfe der neuartigen Lastverteilung zwischen den digitalen Signalprozessoren/programmierbaren Logikbausteinen kann intelligent auf die Auslastung dieser Elemente bzw. Ressourcen reagiert werden, um Staueffekte bei der Datenverarbeitung zu minimieren oder ganz zu vermeiden.

Wenn mehrere Zentraleinheiten, die jeweils mit einem oder mehreren digitalen Signalprozessor und/oder mit einem oder mehreren programmierbaren Logikbausteinen verbunden sind, miteinander gekoppelt sind, so daß ein Cluster bzw. Netzwerk gebildet ist, kann die lastabhängige Verteilung von Rechenaufgaben, die in dem Netzwerk anfallen, zur Optimierung der Leistungsfähigkeit des Gesamtsystems genutzt werden. Bei dem Cluster bzw. Netzwerk handelt es sich um eine "lose" Verbindung einzelner Rechnersysteme (Knoten), die jeweils mindestens eine Zentraleinheit mit einem eigenen Speicher sowie eine Netzwerkanbindung umfassen. Hierbei läuft auf jedem Knoten ein eigenes Betriebssystem.

Eine zweckmäßige Weiterbildung der Erfindung sieht vor, daß beim automatischen Erfassen der Auslastung ermittelt wird, ob die mindestens zwei digitalen Signalprozessoren zu einem vorgegebenen Zeitpunkt in einer Rechenbetriebsart oder in einer Leerlaufbetriebsart betrieben werden, wodurch es möglich ist, vor dem Ausführen einer weitergehenden Auslastungsanalyse grundsätzlich zu prüfen, in welchem Betriebszustand sich der jeweilige digitale Signalprozessor befindet. Die Information darüber, ob die mindestens zwei digitalen Signalprozessoren zu einem vorgegebenen Zeitpunkt in der Rechenbetriebsart oder in der Leerlaufbetriebsart betrieben werden, ist in diesem Fall von der Auslastungsinformation umfaßt.

Eine bevorzugte Ausgestaltung der Erfindung sieht vor, daß beim automatischen Erfassen der Information über die Auslastung der mindestens zwei digitalen Signalprozessoren eine mittlere Auslastung über ein Zeitintervall elektronisch ermittelt wird. Diese ermöglicht es, beim Verteilen der digitalen Rechenaufgaben die Signalprozessoren unabhängig von kurzzeitigen Spitzenbelastungen oder Leerlaufzeiten zu berücksichtigen.

Das automatische Erfassen der Informationen über die mittlere Auslastung kann mit Hilfe einfacher rechentechnischer Mittel dadurch erreicht werden, daß zum automatischen Erfassen der Informationen über die Auslastung für einen oder alle digitalen Signalprozessoren ein Zählstand einer elektronischen Zähleinrichtung während der Leerlauf-Betriebsart fortlaufend erhöht wird und während der Rechenbetriebsart unverändert bleibt, wobei beim elektronischen Ermitteln der mittleren Auslastung jeweils ein Wert automatisch einbezogen wird, der sich aus der Division des Zählstands durch das Zeitintervall ergibt.

Alternativ kann das Ermitteln der mittleren Auslastung bei einer zweckmäßigen Weiterbildung der Erfindung dadurch erreicht werden, daß zum automatischen Erfassen der mittleren Auslastung für einen oder alle digitalen Signalprozessoren ein Zählstand einer elektronischen Zähleinrichtung während der Leerlauf-Betriebsart und ein Zählstand einer weiteren elektronischen Zähleinrichtung während der Rechenbetriebsart fortlaufend erhöht werden, wobei beim elektronischen Ermitteln der mittleren Auslastung jeweils ein Wert automatisch einbezogen wird, der sich aus der Division des Zählstands der elektronischen Zähleinrichtung durch die Summe des Zählstands der elektronischen Zähleinrichtung und des Zählstands der weiteren elektronischen Zähleinrichtung ergibt.

Die Ausführung der digitalen Rechenaufgaben und/oder der Datenbewegungen kann bei einer vorteilhaften Ausführungsform der Erfindung dadurch zeitlich korreliert werden, daß die digitalen Aufgaben beim Verteilen in Abhängigkeit von der erfaßten Informationen über die Auslastung der mindestens zwei digitalen Signalprozessoren einer jeweiligen Stellung in einer Reihenfolge in einer von der Zentraleinheit elektronisch verwalteten Warteschlange entsprechend automatisch berücksichtigt werden.

Bei der Nutzung des Verfahrens in einem Rechnersystem, daß mindestens zwei Zentraleinheiten umfaßt, kann ein individuell auf die digitalen Signalprozessoren/programmierbaren Logikbausteine abgestimmtes Verteilen der digitalen Aufgaben dadurch erreicht werden, daß beim Verteilen der in dem Netzwerk anfallenden, digitalen Aufgaben ein individueller Auslastungsgrad der mindestens zwei digitalen Signalprozessoren automatisch berücksichtigt wird.

Eine zweckmäßige Fortbildung der Erfindung sieht vor, daß beim Verteilen der im Netzwerk anfallenden, digitalen Aufgaben ein gemeinsamer, gemittelter Auslastungsgrad der mindestens zwei digitalen Signalprozessoren automatisch berücksichtigt wird. Hierdurch ist es möglich, die anfallenden Aufgaben zwischen Gruppen von digitalen Signalprozessoren zu verteilen, wobei das Verteilen aufgrund eines gemittelten Auslastungsgrads der Gruppen von Signalprozessoren erfolgen kann.

Das neue Verfahren zum Betreiben eines Rechnersystems kann bei einer vorteilhaften Ausführungsform der Erfindung auch auf Rechnersystemen mit programmierbaren Logikbausteinen angewendet werden, wobei anstelle der mindestens zwei digitalen Signalprozessoren mindestens zwei programmierbare Logikbausteine und/oder anstelle des mindestens einen anderen Signalprozessors mindestens ein anderer programmierbarer Logikbaustein verwendet werden.

Die abhängigen Vorrichtungsansprüche 12 und 13 weisen die in Verbindung mit zugehörigen Verfahrensansprüchen aufgezählten Vorteile entsprechend auf.

Die Erfindung wird im Folgenden anhand von Ausführungsbeispielen unter Bezugnahme auf eine Zeichnung näher erläutert. Hierbei zeigen:
- Figur 1: ein Blockdiagramm eines Rechnersystems; und
- Figur 2: eine schematische Darstellung eines Netzwerks aus mehreren Rechnersystemen.

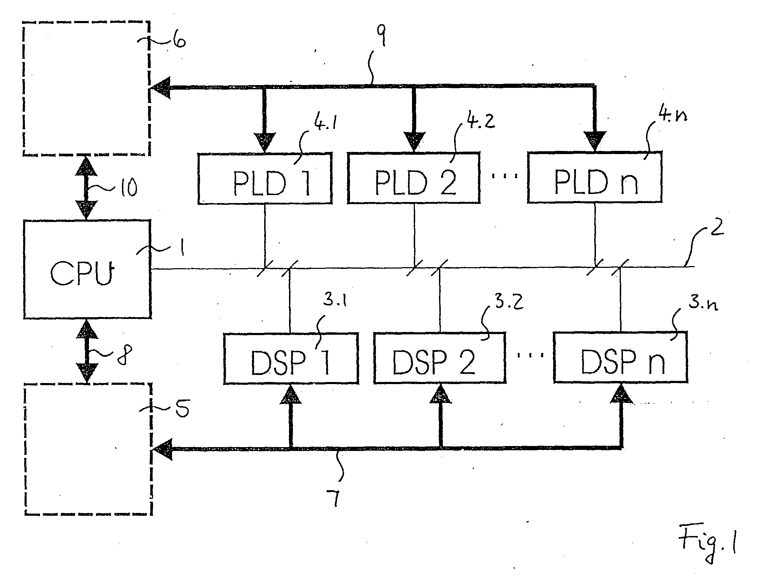

In Figur 1 ist ein Rechnersystem mit einer Zentraleinheit 1 dargestellt. Die Zentraleinheit 1 ist über einen lokalen Bus 2 mit mehreren digitalen Signalprozessoren 3.1, 3.2, ..., 3.n (3.1-3.n) sowie mehreren programmierbaren Logikbausteinen 4.1, 4.2, ..., 4.n (4.1-4.n) verbunden. Über den lokalen Bus 2 wird die Datenkommunikation zwischen der Zentraleinheit 1 und den mehreren digitalen Signalprozessoren 3.1-3.n sowie den mehreren programmierbaren Logikbausteinen 4.1-4.n ausgeführt.

Die digitalen Signalprozessoren 3.1-3.n werden von der Zentraleinheit 1 genutzt, um digitale Rechenaufgaben ausführen zu lassen, und sind aufgrund des jeweiligen Vorhandenseins mehrerer interner Rechenwerke in der Lage, verschiedene Multiplikationen und Additionen gleichzeitig auszuführen. In der Regel können die Signalprozessoren parallel zur Ausführung dieser Rechenoperationen Daten bewegen. Im Allgemeinen sind bei den digitalen Signalprozessoren 3.1-3.n ein zugehöriger Programm- und ein zugehöriger Datenspeicher getrennt (Havard-Architektur).

Die programmierbaren Logikbausteine 4.1-4.n sind jeweils als eine Anordnung mit programmierbaren, elementaren, bool'schen Verknüpfungen und verschiedenen Flipflops ausgebildet.

Die Datenkommunikation zwischen der Zentraleinheit 1 und den mehreren digitalen Signalprozessoren 3.1-3.n sowie zwischen der Zentraleinheit 1 und den mehreren programmierbaren Logikbausteinen 4.1-4.n wird mit Hilfe eines jeweiligen, mittels eines Computerprogramms implementierbaren Kommunikationstreibers 5 bzw. 6 gesteuert und überwacht. In dem jeweiligen Kommunikationstreiber 5 bzw. 6 wird eine Warteschlange für die von der Zentraleinheit 1 an die mehreren digitalen Signalprozessoren 3.1-3.n bzw. die mehreren programmierbaren Logikbausteine 4.1-4.n zu übergebenden Rechenaufgabe und/oder Daten geführt.

In Figur 1 repräsentieren Pfeile 7, 8, 9, 10 die jeweilige Datenkommunikation grafisch, welche physisch über den lokalen Bus 2 zwischen der Zentraleinheit 1 und den digitalen Signalprozessoren 3.1-3.n bzw. zwischen der Zentraleinheit 1 und den programmierbaren Logikbausteinen 4.1-4.n ausgeführt wird. Hierbei werden unter Vermittlung des jeweiligen Kommunikationstreibers 5 bzw. 6 elektronische Daten zwischen der Zentraleinheit 1 und den digitalen Signalprozessoren 3.1-3.n sowie zwischen der Zentraleinheit 1 und den programmierbaren Logikbausteinen 4.1-4.n ausgetauscht. Darüber hinaus werden über den lokalen Bus 2 an die digitalen Signalprozessoren 3.1-3.n sowie an die programmierbaren Logikbausteine 4.1-4.n zusätzliche Funktionen bzw. Netzlisten von der Zentraleinheit 1 übergegeben, die von den digitalen Signalprozessoren 3.1-3.n bzw. den programmierbaren Logikbausteinen 4.1-4.n jeweils im Rahmen von Rechenoperationen bzw. Datenbewegungen auszuführen sind. Auf diese Weise ist es möglich, mit den Signalprozessoren 3.1-3.n und den programmierbaren Logikbausteinen 4.1-4.n auch Verarbeitungsschritte auszuführen, die an diesen Elementen nicht fest installiert sind.

Von der Zentraleinheit 1 werden auszuführenden Rechenoperationen oder Teile von Rechenoperationen oder Datenbewegungen, die zeitkritisch und rechenintensiv sind, an einen der Kommunikationstreiber 5 oder 6 übergeben. Der jeweilige Kommunikationstreiber 5 bzw. 6 reiht die empfangenen Operationen/Teiloperationen in seine Warteschlange ein. Von den digitalen Signalprozessoren 3.1-3.n bzw. von den programmierbaren Logikbausteinen 4.1-4.n empfängt der jeweilige Kommunikationstreiber 5 bzw. 6 elektronische Informationen über deren jeweilige Auslastung, d.h. Informationen darüber, ob und/oder in welchem Umfang der jeweilige digitale Signalprozessor oder der jeweilige programmierbare Logikbaustein in die Ausführung von Operationen eingebunden ist. Die Auslastungsinformation kann hierbei auch Information über eine Auslastung einer Untergruppe der digitalen Signalprozessoren 3.1-3.n bzw. der programmierbaren Logikbausteinen 4.1-4.n umfassen.

Hier wird das sogenannte FIFO-Prinzip angewendet ("first in, first out").

Die in der jeweiligen Warteschlange des Kommunikationstreibers 5 bzw. 6 angeordneten Operationen/Teiloperationen werden dann in Abhängigkeit von der Auslastungsinformation der digitalen Signalprozessoren 3.1-3.n und der programmierbaren Logikbausteine 4.1-4.n und der jeweiligen Stellung der Warteschlange entsprechend an die digitalen Signalprozessoren 3.1-3.n bzw. die programmierbaren Logikbausteine 4.1-4.n übergeben, wobei zunächst vorzugsweise Operationen/Teiloperationen übergeben werden, die in der jeweiligen Warteschlange am weitesten hinten stehen. Die übergebene Operation/Teiloperation wird dann von dem (den) digitalen Signalprozessor(en) bzw. dem (den) programmierbaren Logikbaustein(en) ausgeführt, an welchen der jeweilige Kommunikationstreiber 5 bzw. 6 die Operation/Teiloperation übergeben hat. Nach dem Ausführen der Operation/Teiloperation werden in der Regel elektronische Daten an den jeweiligen Kommunikationstreiber 5 bzw. 6 übermittelt, die von der Zentraleinheit 1 anschließend weiter verarbeitet werden.

Wenn eine Operation/Teiloperation an einen der mehreren digitalen Signalprozessoren 3.1-3.n, beispielsweise an den digitalen Signalprozessor 3.2 übergeben wurde, so kennzeichnet der Kommunikationstreiber 5 den digitalen Signalprozessor 3.2 als "beschäftigt". Nachdem die Operation/Teiloperation von diesem digitalen Signalprozessor 3.2 ausgeführt wurde, wird der digitale Signalprozessor 3.2 mittels des Kommunikationstreibers 5 wieder als "frei" gekennzeichnet, so daß von ihm weitere Operationen/Teiloperationen übernommen werden können. Mit den programmierbaren Logikbausteinen 4.1-4.n wird unter Einbeziehung des Kommunikationstreibers 6 entsprechend verfahren.

Alternativ oder zusätzlich zu der Information über den Zustand ("frei"/"beschäftigt") des jeweiligen digitalen Signalprozessors bzw. des jeweiligen programmierbaren Logikbausteins wird von den mehreren digitalen Signalprozessoren 3.1-3.n und den mehreren programmierbaren Logikbausteinen 4.1-4.n eine Information über die relative Auslastung des jeweiligen Bausteins an den jeweiligen Kommunikationstreiber 5 bzw. 6 übermittelt. Der jeweilige Kommunikationstreiber 5 bzw. 6 ist mit Hilfe dieser Information über die relative Auslastung in der Lage, die in der jeweiligen Warteschlange angeordneten Operationen in Abhängigkeit von der Auslastung der einzelnen Bausteine an die mehreren digitalen Signalprozessoren 3.1-3.n bzw. die programmierbaren Logikbausteine 4.1-4.n zu übergeben. Auf diese Weise werden unnötige Staueffekte in der jeweiligen Warteschlange der Kommunikationstreiber 5, 6 vermieden.

In Figur 1 ist die Zentraleinheit 1 sowohl mit mehreren digitalen Signalprozessoren 3.1-3.n als auch mit mehreren programmierbaren Logikbausteinen 4.1-4.n verbunden. Es ist jedoch auch möglich (nicht dargestellt), daß eine Zentraleinheit entweder nur mit mehreren digitalen Signalprozessoren oder nur mit mehreren programmierbaren Logikbausteinen verbunden ist. Auch in diesen Fällen führt das beschriebene Verfahren des Verteilens von Operationen der Zentraleinheit auf die mit der Zentraleinheit verbundenen Bausteine in Abhängigkeit von deren Auslastung zu einer Verbesserung des jeweiligen Rechnersystems und zur Vermeidung von Staueffekten beim Abarbeiten der Operationen.

Zur elektronischen Ermittlung der Auslastung der digitalen Signalprozessoren 3.1-3.n bzw. der programmierbaren Logikbausteinen 4.1-4.n kann wie folgt vorgegangen werden. Es wird in der Leerlauf-Betriebsart ("idle-mode") ein Zählstand einer elektronischen Zähleinrichtung fortlaufend erhöht. Wird mit Hilfe des zugehörigen digitalen Signalprozessors 3.1-3.n bzw. des zugehörigen programmierbaren Logikbausteins 4.1-4.n eine Berechnung ausgeführt (Rechen-Betriebsart), so geschieht dieses in einem Unterbrechungsmodus (Interrupthandler), der erst nach der Beendigung der Berechnung wieder verlassen wird. In dem Unterbrechungsmodus wird das Inkrementieren der Zähleinrichtung verhindert. Auf diese Weise lassen sich Rückschlüsse auf die Auslastung des digitalen Signalprozessors bzw. des zugehörigen programmierbaren Logikbausteins ziehen, wenn der Zählstand der elektronischen Zähleinrichtung durch ein festes Zeitintervall geteilt wird.

Es kann auch vorgesehen sein, daß zum Ermitteln der Auslastung ein Zeitgeber-Interrupt ("Timer-Interrupt") installiert wird, der in festen Abständen ausgelöst wird. Soll der zugehörige digitale Signalprozessor bzw. der zugehörige programmierbare Logikbaustein eine Berechnung ausführen, so wird eine Einsprungsadresse des Zeitgeber-Interrupts verändert und auf eine Routine gelenkt, die eine Zähleinrichtung 2 inkrementiert. Ist die Berechnung abgeschlossen, so wird auf die alte Routine verzweigt, die eine Zähleinrichtung 1 inkrementiert. Der Interrupt unterbricht sowohl den Leerlauf als auch die Berechnung und die prozentuale Auslastung ergibt sich aus der folgenden Quotienbildung: Zähler 2/(Zähler 1 + Zähler 2). Zum Ausführen des neuen Verfahrens können beim Ermitteln der Auslastung auch andere elektronische Verfahren genutzt werden, wenn die zum lastabhängigen Verteilen der Rechenaufgaben notwendige Auslastungsinformation gewonnen werden kann.

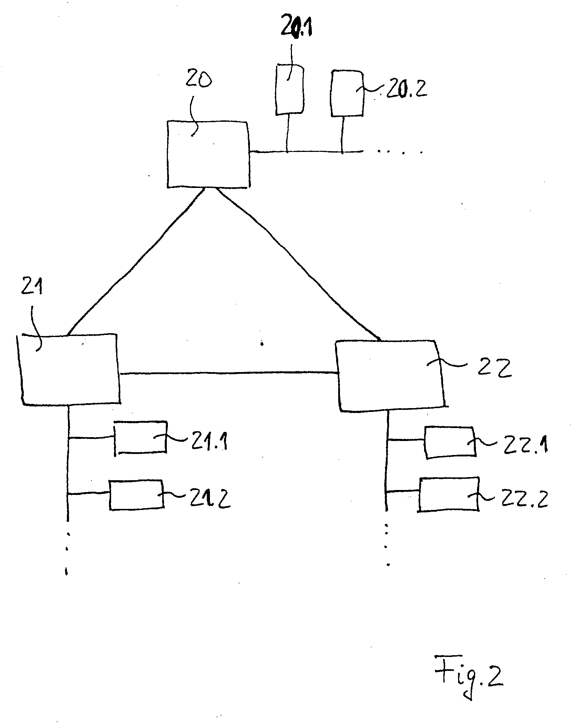

Figur 2 zeigt eine schematische Darstellung eines Netzwerks bzw. eines Clusters mit drei Zentraleinheiten 20, 21, 22, die jeweils mit ergänzenden Bausteinen 20.1, 20.1; 21.1, 21.2 bzw. 22.1, 22.2 verbunden sind. Bei den ergänzenden Bausteinen handelt es sich entweder um digitale Signalprozessoren oder programmierbare Logikbausteine oder eine Kombination dieser Bauteile, wobei jeweils wenigstens zwei programmierbare Logikbausteine oder zwei digitale Signalprozessoren vorgesehen sind. Jede der Zentraleinheiten 20, 21, 22 weist den (die) Kommunikationstreiber auf, der (die) zum Betreiben der jeweiligen ergänzenden Bausteine notwendig ist (sind). Mit Hilfe des (der) jeweiligen Kommunikationstreiber kann von den Zentraleinheiten 20, 21, 22 jeweils das in Verbindung mit Figur 1 beschriebene Verfahren zur lastabhängigen Verteilung von Operationen ausgeführt werden. Darüber hinaus ist vorgesehen, daß die Informationen über den Betriebszustand ("frei"/ "beschäftigt") des jeweiligen ergänzenden Bausteins 20.1, 20.2; 21.1, 21.2 bzw. 22.1, 22.2 und/oder Informationen über deren jeweiligen Auslastungsgrad an eine Netzwerksteuerung bzw. ein Cluster-Management übermittelt werden, welche in Zusammenarbeit mit den Zentraleinheiten 20, 21, 22 eine lastabhängige Verteilung der in dem Netzwerk, d.h. in den Zentraleinheiten 20, 21, 22 auf die ergänzenden Bausteine 20.1, 20.2; 21.1, 21.2 bzw. 22.1, 22.2 ausführt. Hierbei kann wiederum vorgesehen sein, daß die Information über die Auslastung für mehrere der ergänzenden Bausteine 20.1, 20.2; 21.1, 21.2 bzw. 22.1, 22.2 so zusammengefaßt wird, daß eine Auslastung für Untergruppen der ergänzenden Bausteine elektronisch auswertbar zur Verfügung steht.

Auf diese Weise wird erreicht, daß die in dem Netzwerk anfallenden Operationen optimiert so abgearbeitet werden, daß die verschiedenen ergänzenden Bausteine der jeweiligen Auslastung entsprechend einbezogen werden. So kann eine Situation vermieden werden, daß beispielsweise die ergänzenden Bausteine 20.1, 20.2 der Zentraleinheit 20 völlig überlastet sind, während die ergänzenden Bausteine 22.1, 22.2 der Zentraleinheit 22 keine Operationen ausführen, d.h. sich in einer Leerlauf-Betriebsart befinden.

Die Netzwerksteuerung kann hierbei auf einer einzelnen der Zentraleinheiten 20, 21, 22 installiert sein oder über die Zentraleinheiten 20, 21, 22 verteilt sein.

Die in der vorstehenden Beschreibung, der Zeichnung und den Ansprüchen offenbarten Merkmale der Erfindung können sowohl einzeln als auch in beliebiger Kombination für die Verwirklichung der Erfindung in ihren verschiedenen Ausführungsformen von Bedeutung sein.

## Patentansprüche

1. Verfahren zum Betreiben eines Rechnersystems, in welchem eine Zentraleinheit (1) mit mindestens zwei digitalen Signalprozessoren (3.1-3.n) so verbunden ist, daß zwischen der Zentraleinheit (1) und den mindestens zwei digitalen Signalprozessoren (3.1-3.n) jeweils elektronische Daten ausgetauscht werden können, wobei die mindestens zwei digitalen Signalprozessoren (3.1-3.n) auf Anforderung in dem Rechnersystem anfallende, digitale Aufgaben, die insbesondere Rechenaufgaben und/oder Datenbewegungen umfassen, automatisch ausführen, das Verfahren die folgenden Verfahrensschritte umfassend:
- automatisches Erfassen von Informationen über eine Auslastung der mindestens zwei digitalen Signalprozessoren (3.1-3.n) mit Hilfe von Erfassungsmitteln; und
- anschließendes Verteilen der digitalen Aufgaben auf die mindestens zwei digitalen Signalprozessoren (3.1-3.n) in Abhängigkeit von der erfaßten Auslastung der mindestens zwei digitalen Signalprozessoren (3.1-3.n) mit Hilfe von Verteilermitteln.

2. Verfahren nach Anspruch 1, **dadurch gekennzeichnet, daß** beim automatischen Erfassen der Auslastung ermittelt wird, ob die mindestens zwei digitalen Signalprozessoren (3.1-3.n) zu einem vorgegebenen Zeitpunkt in einer Rechenbetriebsart oder in einer Leerlauf-Betriebsart betrieben werden.

3. Verfahren nach Anspruch 1 oder 2, **dadurch gekennzeichnet, daß** beim automatischen Erfassen der Informationen über die Auslastung der mindestens zwei digitalen Signalprozessoren (3.1-3.n) eine mittlere Auslastung über ein Zeitintervall elektronisch ermittelt wird.

4. Verfahren nach Anspruch 3, **dadurch gekennzeichnet, daß** zum automatischen Erfassen der Informationen über die Auslastung für einen oder alle digitalen Signalprozessoren (3.1-3.n) ein Zählstand einer elektronischen Zähleinrichtung während der Leerlauf-Betriebsart fortlaufend erhöht wird und während der Rechenbetriebsart unverändert bleibt, wobei beim elektronischen Ermitteln der mittleren Auslastung jeweils ein Wert automatisch einbezogen wird, der sich aus der Division des Zählstands durch das Zeitintervall ergibt.

5. Verfahren nach Anspruch 3, **dadurch gekennzeichnet, daß** zum automatischen Erfassen der mittleren Auslastung für einen oder alle digitalen Signalprozessoren (3.1-3.n) ein Zählstand einer elektronischen Zähleinrichtung während der Leerlauf-Betriebsart und ein Zählstand einer weiterer elektronischen Zähleinrichtung während der Rechenbetriebsart fortlaufend erhöht werden, wobei beim elektronischen Ermitteln der mittleren Auslastung jeweils ein Wert automatisch einbezogen wird, der sich aus der Division des Zählstands der elektronischen Zähleinrichtung durch die Summe des Zählstands der elektronischen Zähleinrichtung und des Zählstands der weiteren elektronischen Zähleinrichtung ergibt.

6. Verfahren nach einem der vorangehenden Ansprüche, **dadurch gekennzeichnet, daß** die digitalen Aufgaben beim Verteilen in Abhängigkeit von der erfaßten Informationen über die Auslastung der mindestens zwei digitalen Signalprozessoren (3.1-3.n) einer jeweiligen Stellung in einer Reihenfolge in einer von der Zentraleinheit (1) elektronisch verwalteten Warteschlange entsprechend automatisch berücksichtigt werden.

7. Verfahren nach einem der vorangehenden Ansprüche, wobei die Zentraleinheit (20) mit wenigstens einer anderen Zentraleinheit (21, 22) in Verbindung steht, so daß das Rechnersystem ein Netzwerk bzw. Cluster ist, und wobei die wenigstens eine andere Zentraleinheit (21, 22) mit mindestens einem anderen digitalen Signalprozessor (21.1, 21.2 bzw. 22.1, 22.2) verbunden ist, welcher auf Anforderung digitale Aufgaben, die insbesondere Rechenaufgaben und/oder Datenbewegungen umfassen, ausführt, **dadurch gekennzeichnet, daß** weitere Informationen über eine Auslastung des mindestens einen anderen digitalen Signalprozessors (21.1, 21.2 bzw. 22.1, 22.2) automatisch erfaßt werden, die weiteren erfaßten Informationen über die Auslastung des mindestens einen anderen digitalen Signalprozessors (21.1, 21.2 bzw. 22.1, 22.2) und die erfaßten Informationen über die Auslastung der mindestens zwei digitalen Signalprozessoren (20.1, 20.2) an Netzwerk-Steuermittel übermittelt und automatisch verarbeitet werden, um in dem Netzwerk anfallende, digitale Aufgaben in Abhängigkeit von den an die Netzwerk-Steuermittel übermittelten Informationen über die Auslastung auf die mindestens zwei digitalen Signalprozessoren (20.1, 20.2) und den mindestens einen anderen Signalprozessor (21.1, 21.2 bzw. 22.1, 22.2) automatisch zu verteilen.

8. Verfahren nach einem der vorangehenden Ansprüche, **dadurch gekennzeichnet, daß** beim Verteilen der in dem Netzwerk anfallenden, digitalen Aufgaben ein individueller Auslastungsgrad der mindestens zwei digitalen Signalprozessoren (20.1, 20.2) automatisch berücksichtigt wird.

9. Verfahren nach einem der vorangehenden Ansprüche, **dadurch gekennzeichnet, daß** beim Verteilen der in dem Netzwerk anfallenden, digitalen Aufgaben ein gemeinsamer, gemittelter Auslastungsgrad der mindestens zwei digitalen Signalprozessoren (20.1, 20.2) automatisch berücksichtigt wird.

10. Verfahren nach einem der Ansprüche 1 bis 9, wobei anstelle der mindestens zwei digitalen Signalprozessoren (3.1-3.n) mindestens zwei programmierbare Logikbausteine (4.1-4.n) und/oder anstelle des mindestens einen anderen Signalprozessors mindestens ein anderer programmierbarer Logikbaustein verwendet werden.

11. Datenverarbeitungseinrichtung mit einer Zentraleinheit (1) und mindestens zwei digitalen Signalprozessoren (3.1-3.n), die jeweils mit der Zentraleinheit (1) verbunden sind und auf Anforderung in der Datenverarbeitungseinrichtung anfallende, digitale Aufgaben, die insbesondere Rechenaufgaben und/oder Datenbewegungen umfassen, automatisch ausführen können, wobei zwischen den mindestens zwei digitalen Signalprozessoren (3.1-3.n) und der Zentraleinheit (1) jeweils elektronische Daten austauschbar sind, **gekennzeichnet durch** Überwachungsmittel zum Überwachen einer Auslastung der zwei digitalen Signalprozessoren (3.1-3.n) und Verteilermittel zum Verteilen der digitalen Aufgaben auf die mindestens zwei Signalprozessoren (3.1-3.n) in Abhängigkeit von der Auslastung.

12. Datenverarbeitungseinrichtung nach Anspruch 11, **gekennzeichnet durch** eine jeweilige elektronische Zähleinrichtung für die mindestens zwei digitalen Signalprozessoren (3.1-3.n), wobei ein Zählstand der jeweiligen elektronischen Zähleinrichtung in einer Leerlauf-Betriebsart der mindestens zwei digitalen Signalprozessoren (3.1-3.n) fortlaufend erhöht werden kann und in einer Rechenbetriebsart der mindestens zwei digitalen Signalprozessoren (3.1-3.n) unverändert bleibt.

13. Datenverarbeitungseinrichtung nach Anspruch 11 oder 12, wobei die Zentraleinheit (20) mit wenigstens einer anderen Zentraleinheit (21, 22) in Verbindung steht, so daß die Datenverarbeitungseinrichtung ein Netzwerk ist, und wobei die wenigstens eine andere Zentraleinheit (21, 22) mit mindestens einem anderen digitalen Signalprozessor (21.1, 21.2 bzw. 22.1, 22.2) verbunden ist, welcher auf Anforderung digitale Aufgaben ausführt, **gekennzeichnet durch** Netzwerk-Steuermittel zum Empfangen und automatischen Verarbeiten von Informationen über die Auslastung der mindestens zwei digitalen Signalprozessoren (20.1, 20.1) und die Auslastung des mindestens einen anderen digitalen Signalprozessors (21.1, 21.2 bzw. 22.1, 22.2), um in dem Netzwerk anfallende, digitale Aufgaben in Abhängigkeit von den an die Netzwerk-Steuermittel übermittelten Informationen über die Auslastung auf die mindestens zwei digitalen Signalprozessoren (20.1, 20.2) und den mindestens einen anderen Signalprozessor (21.1, 21.2 bzw. 22.1, 22.2) automatisch zu verteilen.
